**Europäisches Patentamt**

**European Patent Office**

**Office européen des brevets**

(19)

(11) Numéro de publication : **0 293 291 B1**

# FASCICULE DE BREVET EUROPEEN

(12)

(45) Date de publication du fascicule du brevet :
06.05.92 Bulletin 92/19

(51) Int. Cl.⁵ : **G06F 3/033**, G06F 3/037

(21) Numéro de dépôt : **88401253.5**

(22) Date de dépôt : **24.05.88**

(54) **Dispositif de commande à distance d'un ordinateur associé à un écran vidéo.**

(30) Priorité : **25.05.87 FR 8707322**

(43) Date de publication de la demande :
**30.11.88 Bulletin 88/48**

(45) Mention de la délivrance du brevet :
**06.05.92 Bulletin 92/19**

(84) Etats contractants désignés :
**DE GB IT**

(56) Documents cités :
**EP-A- 0 166 432**
**FR-A- 2 544 103**
**GB-A- 2 152 250**

(73) Titulaire : **SEXTANT AVIONIQUE S.A.**
**Immeuble le Galilée Parc Tertiaire de Meudon**
**5/7 rue Jeanne Braconnier**
**F-92366 Meudon la Forêt Cédex (FR)**

(72) Inventeur : **Gruaz, Daniel**
**53 rue du Petit Pont**
**F-78180 Montigny le Bretonneux (FR)**
Inventeur : **Marchal, Claude**
**6 ruelle du Loup**
**F-78890 Garancieres (FR)**

(74) Mandataire : **Bloch, Gérard et al**
**2, square de l'Avenue du Bois**
**F-75116 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

# Description

La présente invention concerne un dispositif de commande à distance d'un ordinateur associé à un écran vidéo.

Les dispositifs de commande à distance d'un ordinateur sont maintenant extrêmement répandus, le dispositif le plus connu étant communément désigné sous le nom de "souris". Un tel dispositif comporte un organe, généralement une roulette ou une bille, pour la sélection et la modification d'une donnée affichée sur l'écran vidéo, et un organe de commutation associé l'organe de sélection et de modification, l'ensemble étant généralement relié à l'ordinateur par un câble. En déplaçant le dispositif sur un plan on fait bouger l'organe de sélection et de modification de données et un pointeur se déplace de la même façon sur l'écran puis une action sur l'organe de commutation permet d'obtenir soit la validation de la donnée sélectionnée, soit le passage à une autre fonction, par exemple l'affichage d'une autre page de données sur l'écran vidéo. L'utilisation d'un tel dispositif suppose que l'on dispose d'un support plan stable, faute de quoi la "souris" se déplace d'elle-même sur le support lorsqu'elle n'est pas tenue en main par un opérateur.

Une telle contrainte est généralement incompatible avec la commande à distance d'un ordinateur à bord d'un avion ou, d'une façon plus générale, à bord d'un engin mobile.

On connaît également des dispositifs de commande à distance comprenant une tablette magnétique sur laquelle est déplacé un crayon portant un organe de commutation, la sélection ou la modification d'une donnée affichée étant obtenue en déplaçant le crayon sur la tablette puis en validant la donnée au moyen de l'organe de commutation. Une fois encore, ce dispositif présente l'inconvénient de requérir l'usage d'un accessoire mobile qu'il est donc nécessaire de maintenir en place pendant les périodes de non usage. De plus, lorsqu'un dispositif de ce type est utilisé à bord d'un aéronef soumis à ces mouvements qui peuvent être brusques, il est relativement difficile de contrôler avec précision la position du crayon sur la tablette magnétique.

Un but de la présente invention est de proposer un dispositif de commande à distance d'un ordinateur associé à un écran vidéo qui soit de manipulation simple et précise quelles que soient les conditions d'utilisation, et notamment à bord d'un avion.

En vue de la réalisation de ce but, on peut prévoir un dispositif de commande à distance d'un ordinateur associé à un écran vidéo, ce dispositif comportant un organe de sélection et de modification d'une donnée affichée sur l'écran vidéo, un organe de commutation associé à l'organe de sélection et de modification, et des moyens de liaison entre le dispositif de commande à distance et l'ordinateur, dans lequel l'organe de sélection et de modification est une tablette tactile montée mobile sur un support et l'organe de commutation est disposé pour être actionné par un déplacement de la tablette tactile.

Un tel dispositif est quasiment connu par le document GB-A-2 152 250. Ainsi, avec ce dernier dispositif, la sélection et la modification d'une donnée sont obtenues en déplaçant un doigt sur la tablette tactile, ce qu'il est généralement possible d'effectuer avec précision même lorsque le dispositif de commande est monté à bord d'un avion, et l'actionnement de l'organe de commutation est obtenu en déplaçant la tablette tactile, ce qui peut être fait en utilisant le doigt qui a été préalablement déplacé sur cette même tablette.

La présente invention se distingue du dispositif connu par le fait que la tablette tactile est associée rigidement à des moyens de suspension montés pour pivoter autour d'un axe parallèle à la tablette tactile et rappelée dans une position de repos par des moyens élastiques, et l'organe de commutation est également associé aux moyens de suspension.

Ainsi, grâce à l'invention, l'organe de commutation est manoeuvré par simple enfoncement de la tablette tactile et la force nécessaire pour l'actionnement de l'organe de commutation est constante quel que soit l'endroit où le doigt de l'opérateur est appliqué pour effectuer cet enfoncement.

De préférence, lesdits moyens de suspension comprennent un parallélogramme articulé, la tablette étant associée rigidement à un côté du parallélogramme.

Selon un aspect avantageux de l'invention, la tablette tactile est entourée d'un cadre associé au support et est reliée au cadre par un joint d'étanchéité souple.

Ainsi, on évite toute pénétration de corps étrangers dans le dispositif de commande.

D'autres caractéristiques et avantages de l'invention apparaîtront à la lumière de la description qui suit en liaison avec les dessins ci-joints parmi lesquels :

– la figure 1 est une représentation schématique illustrant les liaisons entre le dispositif de commande à distance, l'ordinateur et l'écran vidéo,

– la figure 2 est une vue en coupe, partiellement schématique, du dispositif de commande selon l'invention en position de repos,

– la figure 3 est une vue analogue à celle de la figure 2 pour une position de commutation du dispositif de commande selon l'invention.

En référence aux figures, le dispositif de commande à distance selon l'invention, généralement désigné en 1, est associé d'une façon classique à un ordinateur 2 par un câble de liaison 3. L'ordinateur 2 est lui-même relié à un écran vidéo 4 par l'intermédiaire d'un cable de liaison 5. Le dispositif de commande à distance 1 comporte un boîtier 6 dont la face supérieure forme un cadre 7 pour une tablette tactile 8 reliée au cadre 7 par un joint d'étanchéité souple 9, par exemple un soufflet annulaire en caoutchouc.

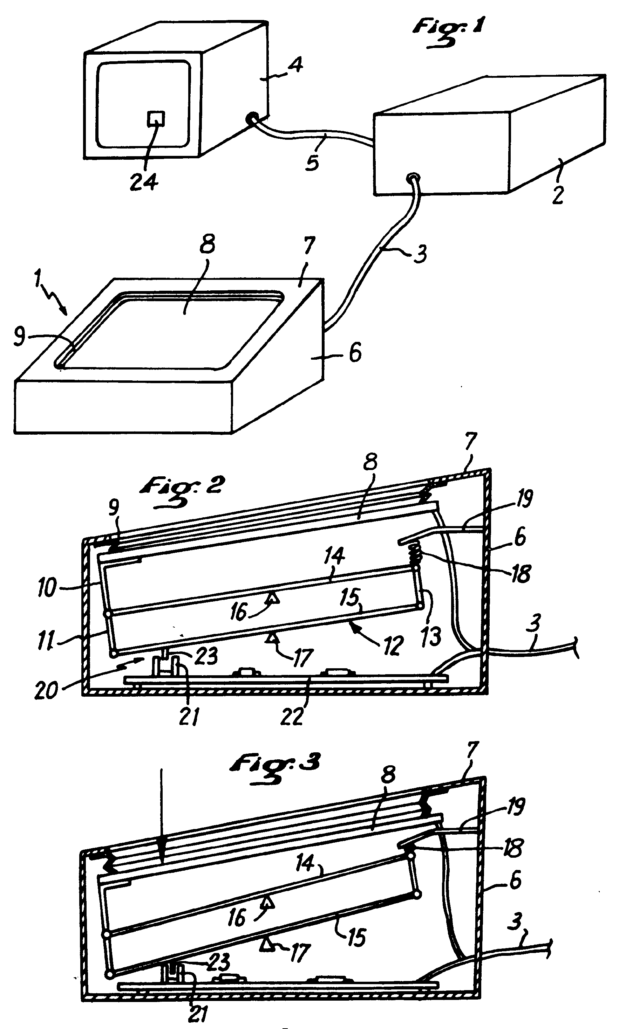

Par ailleurs, la tablette tactile 8 est associée rigidement, par exemple au moyen d'une équerre 10, à un côté 11 d'un parallélogramme articulé de suspension généralement désigné en 12 comportant un côté vertical 13 opposé au côté 11 et deux côtés légèrement inclinés respectivement 14 et 15 dont les extrémités sont reliées de façon articulée aux côtés 11 et 13 pour former le parallélogramme 12 et qui reposent en leur milieu sur des couteaux 16 et 17 convenablement reliés, de façon non représentée, au boîtier support 6. Le parallélogramme articulé 12 est rappelé dans sa position de repos représentée sur la figure 2, par des moyens élastiques tels qu'un ressort hélicoïdal 18 disposé entre un côté du parallélogramme articulé 12 et une potence 19 portée par le boîtier 6. Un organe de commutation généralement désigné en 20 comporte une fourche opto-électronique 21 fixée sur une plaque 22 et en regard de laquelle est disposée une lame 23 en saillie vers le bas par rapport au côté inférieur 15 du paralélogramme 12. La plaque 22 comporte également des composants permettant l'alimentation de la fourche opto-électronique 21 et la transmission du signal de commutation obtenu lorsque la lame 23 pénètre entre les branches de la fourche 21.

Le fonctionnement du dispositif selon l'invention est le suivant : l'ordinateur 2 affiche de façon habituelle un certain nombre de données sur l'écran vidéo 4, par exemple, à bord d'un avion, des données telles que le cap de l'avion, l'altitude de vol et la vitesse de l'avion. Lorsque l'on souhaite modifier une donnée, celle-ci est tout d'abord sélectionnée en appliquant un doigt sur la tablette tactile 8 sans provoquer l'enfoncement de celle-ci. Un pointeur 24 apparaît alors sur l'écran en un endroit correspondant à la position du doigt sur la tablette. A ce propos on notera que la tablette tactile peut être de tout type connu sensible au contact d'un doigt, par exemple comportant une série de plages capacitives, et susceptible de transmettre à l'ordinateur 2 une information relative à la position du doigt qui est posé sur la tablette. Le pointeur 24 peut également être formé par tout signal utilisé sur un écran vidéo, par exemple un changement de couleur de l'écran dans la zone concernée par la sélection. Si le pointeur ne coïncide pas avec la donnée que l'opérateur souhaite modifier, celui-ci déplace son doigt sur la tablette tactile jusqu'au moment où le pointeur coïncide avec la donnée qu'il souhaite modifier. Lorsque le pointeur 24 coïncide avec la donnée que l'opérateur souhaite modifier, l'opérateur enfonce la tablette en exerçant simplement une pression sur celle-ci au moyen du doigt qui a servi à déplacer le pointeur. Le parallélogramme 12 bascule alors sur les couteaux 16 et 17 en comprimant le ressort 18 et la lame 23 pénètre entre les branches de la fourche 21 provoquant une validation de la sélection effectuée et le passage à la phase de traitement suivante, par exemple la modification de la donnée sélectionnée. Pour effectuer cette modification, l'opérateur relâche la tablette qui revient dans la position de repos représentée sur la figure 2 sous l'action du ressort 18 et déplace à nouveau son doigt sur la tablette dans un sens approprié en fonction du programme d'ordinateur, par exemple vers le haut pour faire croître le chiffre à modifier ou vers le bas pour faire décroître le chiffre à modifier, jusqu'à ce que la valeur souhaitée apparaisse sur l'écran vidéo 4. La nouvelle valeur est alors validée en enfonçant à nouveau la tablette tactile, ce mouvement ayant pour effet de passer une fois encore à la fonction suivante, par exemple de revenir à la sélection d'une donnée à modifier.

On notera que suivant le programme utilisé, la tablette permettra de modifier une donnée soit de façon globale, soit chiffre par chiffre.

Pour une tablette de petites dimensions on peut prévoir des moyens de suspension de la tablette plus simples qu'un parallélogramme articulé.

## Revendications

1. Dispositif de commande à distance d'un ordinateur (2) associé à un écran vidéo (4), ce dispositif comportant un organe (8) de sélection et de modification d'une donnée affichée sur l'écran vidéo, un organe de commutation (20) associé à l'organe de sélection et de modification, et des moyens de liaison (3) entre le dispositif de commande à distance et l'ordinateur (2), l'organe de sélection et de modification étant une tablette tactile (8) montée mobile sur un support (6), et l'organe de commutation (20) étant disposé pour être actionné par un déplacement de la tablette tactile (8), caractérisé en ce que la tablette tactile (8) est associée rigidement à des moyens de suspension (12) montés pour pivoter autour d'un axe parallèle à la tablette tactile et rappelée dans une position de repos par des moyens élastiques (18), et en ce que l'organe de commutation (20) est également associé aux moyens de suspension (12).

2. Dispositif de commande à distance selon la revendication 1, caractérisé en ce que lesdits moyens de suspension comprennent un parallélogramme articulé (12), la tablette tactile (8) étant associée rigidement à un côté du parallélogramme (12).

3. Dispositif de commande à distance selon l'une des revendications 1 et 2, caractérisé en ce que la tablette tactile (8) est entourée d'un cadre (7) associé au support (6) et est reliée au cadre (7) par un joint d'étanchéité souple (9).

4. Dispositif de commande à distance selon la revendication 3, caractérisé en ce que le joint d'étanchéité souple (9) est un soufflet annulaire.

**Patentansprüche**

1. Fernsteuervorrichtung für einen Rechner (2), der mit einem Bildschirm (4) verbunden ist, wobei diese Vorrichtung ein Organ (8) zur Auswahl und Veränderung auf dem Bildschirm (4) dargestellten Daten umfaßt sowie ein Schaltorgan (20), welches mit dem Organ (8) zur Auswahl und Veränderung verbunden ist, und Mittel zur Verbindung (3) zwischen der Fernsteuervorrichtung und dem Rechner (2), wobei das Organ zur Auswahl und Veränderung eine Tastplatte (8) darstellt, die beweglich an einer tragenden Vorrichtung (6) angebracht ist, und das Schaltorgan (20) so angeordnet ist, daß es durch eine Verschiebung der Tastplatte (8) betätigt wird, dadurch gekennzeichnet, daß die Tastplatte (8) in starrer Weise mit Mitteln zur Aufhängung (12) verbunden ist, welche so montiert sind, daß sie um eine Achse parallel zur Tastplatte (8) schwenken, und durch elastische Mittel (18) in eine Ruhestellung zurückgebracht wird und daß das Schaltorgan (20) ebenfalls mit den Mitteln zur Aufhängung (12) verbunden ist.

2. Fernsteuervorrichtung nach Anspruch 1, dadurch gekennzeichnet, daß die besagten Mittel zur Aufhängung ein gelenkiges Parallelogramm (12) umfassen, wobei die Tastplatte (8) mit einer Seite des Parallelogramms (12) starr verbunden ist.

3. Fernsteuervorrichtung nach einem der Ansprüche 1 und 2, dadurch gekennzeichnet, daß die Tastplatte (8) von einem mit der tragenden Vorrichtung (6) assoziierten Rahmen (7) umgeben ist und mit dem Rahmen (7) durch eine flexible Dichtung (9) verbunden ist.

4. Fernsteuervorrichtung nach Anspruch 3, dadurch gekennzeichnet, daß die flexible Dichtung (9) aus einem ringförmigen Balg besteht.

**Claims**

1. A remote control device for a computer (2) associated with a video screen (4), said device comprising a member (8) for selecting and changing a data item displayed on the video screen, a switch (20) associated with the member (8) for selecting and changing a data item, and connection means (3) between the remote control device and the computer (2), the member for selecting and changing a data item being a touch-sensitive pad (8) movably mounted on a support (6), and the switch (20) being disposed to be actuated by displacing the touch-sensitive pad (8) wherein the touch-sensitive pad (8) is rigidly associated with suspension means (12) which is mounted to pivot about an axis parallel to the touch-sensitive pad (8) and is returned to a rest position by resilient means (18), and wherein the switch (20) is also associated with said suspension means (12).

2. A remote control device according to claim 1, wherein said suspension means include a parallelogram linkage (12), the touch-sensitive pad (8) being rigidly associated with one of the sides of the parallelogram (12).

3. A remote control device according to claim 1 or 2, wherein the touch-sensitive pad (8) is surrounded by a frame (7) associated with the support (6) and is connected to the frame (7) by a flexible sealing gasket (9).

4. A remote control device according to claim 3, wherein the flexible sealing gasket (9) is constituted by an annular bellows.

Fig. 1

Fig. 2

Fig. 3